# EUROPEAN PATENT APPLICATION

(11) **EP 1 830 368 A1**
(43) Date of publication of application: **05.09.2007**
(21) Application number: 07004228.8
(22) Date of filing: 01.03.2007
(51) Int. Cl.: G21C 3/322

(54) **Multiple and variably-spaced intermediate flow mixing vane grids for fuel assembly**

(30) Priority: 02.03.2006 US 366964
(71) Applicant: Westinghouse Electric Company LLC, Monroeville, PA 15146-2866 (US)
(72) Inventor: Conner, Michael E., South Carolina (US); Karoutas, Zeses E., Simsbury, Connecticut 06070 (US); Dzodzo, Milorad B., Pittsburgh, Pennsyslvania 15146 (US); Liu, Bin, Pittsburgh, Pennsylvania 15235 (US); Joffre, Paul F., Colchester, Connecticut 06415 (US); Paramonov, Dimitry V., Monroeville, Pennsylvania 15146 (US); Smith, Levie D., Columbia, South Carolina 29212 (US)
(74) Representative: Gallo, Wolfgang

(57) **Abstract**

A fuel assembly for a pressurized water reactor that includes a bottom nozzle (22), a plurality of elongated guide thimbles (24) projecting upwardly from the bottom nozzle (22), an array of fuel rods (28), a plurality of support grids (26) axially spaced along the guide thimbles (24), and at least two Intermediate Flow Mixing grids (134), which may have different configurations of mixing device formations, disposed between pairs of non-uniformly spaced, adjacent support grids (26) at selected locations.

## Description

### BACKGROUND OF THE INVENTION

### Field of the Invention

The present invention relates to nuclear fuel assemblies and, more specifically, to a mixing grid incorporated into a nuclear fuel assembly.

### Description of the Prior Art

In a typical pressurized water reactor (PWR), the reactor core is comprised of a large number of generally vertical, elongated fuel assemblies. The fuel assemblies include a frame assembly structured to support a plurality of fuel rods. The fuel assembly includes a top nozzle, a bottom nozzle, a plurality of structural support grids and intermediate flow mixing grids, and a plurality of thimble tubes. The grids are attached to the plurality of elongated thimble tubes which extend vertically between the top and bottom nozzles. The thimble tubes typically receive control rods, plugging devices, or instrumentation therein. A fuel rod includes nuclear fuel, typically, clad in a cylindrical metal tube. Generally, water enters the fuel assembly through the bottom nozzle and passes vertically upward through the fuel assembly. As the water passes over the fuel rods, the water is heated until the water exits the top nozzle at an elevated temperature.

The support grids are used to position the fuel rods in the reactor core, resist fuel rod vibration, provide lateral support for the fuel rods and, to some extent, vertically restrain the fuel rods against longitudinal movement. The support grids are commonly positioned approximately 20 inches apart in the axial direction to provide mechanical support to the rods. A common problem in the PWR fuel industry is vibration of the fuel rod/support system as a natural response to coolant flow. This phenomenon is manifested as grid-to-rod fretting, which can ultimately lead to a breach in the fuel rod cladding and leakage of nuclear fuel material into the coolant.

Another role of support grids is to produce turbulent mixing of the coolant passing through them. Mixing is induced by devices on the grids, for example, but not limited to, mixing vanes. The mixing imparted by the mixing devices enhances heat transfer from the fuel rods. The benefits of increased heat transfer from the rods include the following: lower fuel operating temperature, thus greater resistance to fuel cladding corrosion (which can lead to breach/failure of the cladding); increased fuel assembly Critical Heat Flux (CHF) capability; a reduced tendency for the coolant to boil on the rod surface *(i.e.,* subcooled nucleate boiling), which reduces the risk of crud formation on the rods. The existence of crud can lead to Crud Induce Power Shift (CIPS), a phenomenon which can result in a costly penalty to plant operating power levels. These benefits translate into increased plant operating margins, higher fuel reliability, and/or can enable plant upratings.

Considering the application of support grids in fuel assembly design, previous industry practice has been to add a "mixing" grid between the structural support grids in the upper spans. The mixing grids do not necessarily contact the fuel rods. Commonly called Intermediate Flow Mixing grids (IFMs), these grids effectively reduce the free space between grids from 20 in. to approximately 10 in., thereby increasing the coolant mixing (hence, heat transfer) from the rods. Another benefit of IFMs is reduced fuel rod vibration, thus reducing grid-to-rod fretting. A typical 12 ft. fuel assembly has six structural support grids (from top to bottom) and three IFMs (in the upper spans).

As nuclear plants continue to push PWR fuel to run hotter (either via plant uprates or by loading pattern efficiencies), the demand on PWR fuel are becoming more stringent. Greater heat rejection from the fuel rods is vital to avoid increasing risk of CIPS or fuel rod corrosion and to increase (or just maintain) margin from CHF. In addition, there is a greater need to provide fuel that is "leaker free," *i.e.,* with essentially zero risk of grid-to-rod fretting. In addressing these challenges, the PWR fuel industry has mainly been focused on the design of the support grid (and/or IFM). Though design changes have been somewhat successful in increasing the grid's thermal performance, there may be a practical limit to the effectiveness of the mixing grid design *per se,* for a given grid-to-grid spacing in the fuel assembly.

There is, therefore, a need for additional mixing of the coolant without altering the other basic components of the system. There is a further need to utilize components that have been proven to be reliable in the PWR industry.

### SUMMARY OF THE INVENTION

These needs, and others, are met by the present invention which provides multiple IFMs between adjacent structural support grids at the upper end of the fuel assembly. The use of an IFM between adjacent structural support grids increases fuel assembly heat transfer, reduces the risk of CIPS and/or fuel rod corrosion, increases CHF performance, and reduces the risk of grid-to-rod fretting. Generally, the invention provides for an increase in the number of IFMs between adjacent structural support grids from one to at least two. The addition of IFM's between support grids decreases the distance the coolant must travel before becoming perturbed again. This shorter "mixing length" increases the rod average heat transfer coefficient, resulting in reduced rod temperature and increased resistance to fuel rod corrosion. An additional benefit of a shorter "mixing length" is increased CHF performance.

Preferably, the additional IFMs are disposed in the upper spans of the fuel assembly in which crud is more likely to form. Data indicates that crud formation is more prevalent in spans 5 and 6, *i.e.,* in the upper spans of the fuel assembly where coolant temperature is closer to saturation. The improved span average heat transfer coefficient helps to reduce the coolant steaming rate (mass evaporation), thus reducing the risk of crud formation on the fuel rods (thus reduced risk of CIPS). The use of additional IFMs further optimizes the spacing between the IFM's and grids with respect to improved heat transfer. (The spacing between the grids need not be uniform.) That is, as the axial power profile is non-uniform, the coolant heatup rate and rod axial temperature distribution is also non-uniform. In the span with multiple IFMs, the grid spacings between the IFMs and the IFM-to-Structural Mixing grid in the present invention are adjusted to maximize the heat transfer coefficient (minimize rod temperature).

The present invention further optimizes the distribution of the heat transfer coefficient throughout the fuel assembly by prescribing different mixing features for different elevations. The design of the mixing devices on the IFMs and/or support grids located in the upper spans are optimized for the coolant mixing conditions at those elevations (e.g., lower density) versus corresponding grids in the lower elevations of the fuel assembly. This optimization may include no mixing features (i.e., vanes) on grids low in the assembly where the performance enhancement is not needed. The available pressure drop can then be applied by adding IFM_{S} in the upper spans or enlarging vanes on current grids.

### BRIEF DESCRIPTION OF THE DRAWINGS

A further understanding of the invention can be gained from the following description of the preferred embodiments when read in conjunction with the accompanying drawings in which:
Figure 1 is a schematic side view of a nuclear fuel assembly of the prior art.
Figure 2 is a schematic side view of a nuclear fuel assembly according to the present invention.

### DESCRIPTION OF THE PREFERRED EMBODIMENT

As used herein, a "mixing device" is a vane, or other structure that creates turbulence in, or effects the direction of, the generally upward flow of the coolant.

As used herein "spaced unevenly" indicates that in a series of three or more grids, support and/or Intermediate Flow Mixing, at least one grid in the series is closer to one grid in the series than to another grid in the series.

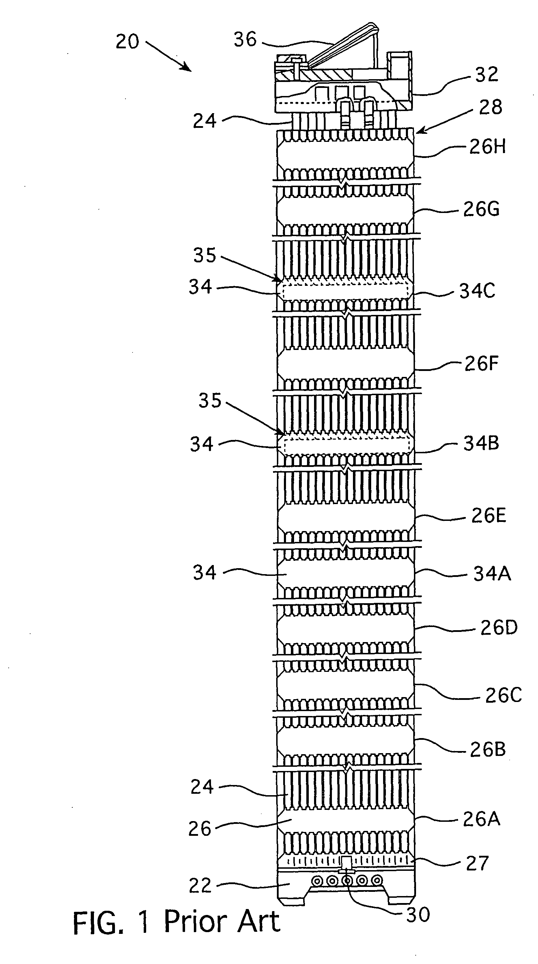

A prior art fuel assembly 20 for a nuclear reactor is shown in Figure 1. The fuel assembly 20 is disposed in a water vessel (not shown) having an inlet at the bottom and an outlet at the top. The fuel assembly 20 comprises a lower end structure or bottom nozzle 22 for supporting the fuel assembly 20 on the lower core plate (not shown) in the core region of a reactor (not shown); a number of longitudinally extending control rod guide tubes, or thimbles 24, projecting upwardly from the bottom nozzle 22; a plurality of transverse support grids 26 axially spaced along the guide thimbles 24; an organized array of elongated fuel rods 28 transversely spaced and supported by the grids 26; an instrumentation tube 30 located in the center of the assembly; and an upper end structure or top nozzle 32 attached to the upper ends of the guide thimbles 24, in a conventional manner, to form an integral assembly capable of being conventionally handled without damaging the assembly components. The bottom nozzle 22 and the top nozzle 32 have end plates (not shown) with flow openings (not shown) for the upward longitudinal flow of a fluid coolant, such as water, to pass up and along the various fuel rods 28 to receive the thermal energy therefrom. As shown in Figure 1, there are eight support grids 26 identified as support grids 26A-26H, with support grid 26A being closest to the bottom nozzle 22 and the support grids 26 being lettered sequentially upwards so that support grid 26H is closest to the top nozzle 32. Just above the bottom nozzle 22 is a protective structure 27 to protect the bottom region of the fuel rods 28 from debris. It is further noted that the support grids 26A- 26H are spaced about twenty inches apart.

To promote mixing of the coolant among the fuel rods 28, one mixing vane grid structure or one Intermediate Flow Mixing grid (IFM) 34 is disposed between a pair of support grids 26 and mounted on the guide thimbles 24. As shown, there are three Intermediate Flow Mixing grids 34A, 34B, 34C each of which are disposed generally an equal distance from the adjacent support grids 26. As shown, the lower Intermediate Flow Mixing grid 34A is disposed between the fourth support grid 26D and the fifth support grid 26E. The middle Intermediate Flow Mixing grid 34B is disposed between the fifth support grid 26E and the sixth support grid 26F. The upper Intermediate Flow Mixing grid 34C is disposed between the sixth support grid 26F and the seventh support grid 26G. The Intermediate Flow Mixing grids 34 include one or more mixing devices 35 located adjacent the fuel rods 28. Additionally, the support grids 26 may be structured with mixing devices 35 to promote mixing. In the prior art, the Intermediate Flow Mixing grids 34 included the same size and type of mixing device 35 on all Intermediate Flow Mixing grids 34. That is, in the prior art, if one Intermediate Flow Mixing grid 34 used vanes as a mixing device 35, all Intermediate Flow Mixing grids 34 used similar sized vanes as a mixing device 35.

The top nozzle 32 includes a transversely extending adapter plate (not shown) having upstanding sidewalls secured to the peripheral edges thereof in defining an enclosure or housing. An annular flange (not shown) is secured to the top of the sidewalls and suitably clamped to this flange are leaf springs 36 which cooperate with the upper core plate (not shown) in a conventional manner to prevent hydraulic lifting of the fuel assembly caused by upward coolant flow while allowing for changes in fuel assembly length due to core induced thermal expansion and the like. Disposed within the opening defined by the sidewalls of the top nozzle 32 is a conventional rod cluster control assembly 38 for vertically moving the control rods in the control rod guide thimbles 24 in a well known manner. To form the fuel assembly 20, support grids 26 and a plurality of Intermediate Flow Mixing grids 34 are attached to the longitudinally extending guide thimbles 24 at predetermined axially spaced locations. The bottom nozzle 22 is suitably attached to the lower ends of the guide thimbles 24 and then the top nozzle 32 is attached to the upper ends of guide thimbles 24. Fuel rods 28 are then inserted through the support grids 26 and IFMs 34. The fuel rods 28 are generally elongated cylinders. For a more detailed description of the fuel assembly 20, reference should be made to U.S. Patent No. 4,061,536.

The fuel assembly 20 depicted in the drawings is of the type having a square array of fuel rods 28 with the control rod guide thimbles 24 being strategically arranged within the fuel rod array. Further, the bottom nozzle 22, the top nozzle 32, and likewise the support grids 26 are generally square in cross section. In that the specific fuel assembly 20 represented in the drawings is for illustrational purposes only, it is to be understood that neither the shape of the nozzles or the grids, or the number and configuration of the fuel rods 28 and guide thimbles 24 are to be limiting, and the invention is equally applicable to different shapes, configurations, and arrangements than the ones specifically shown.

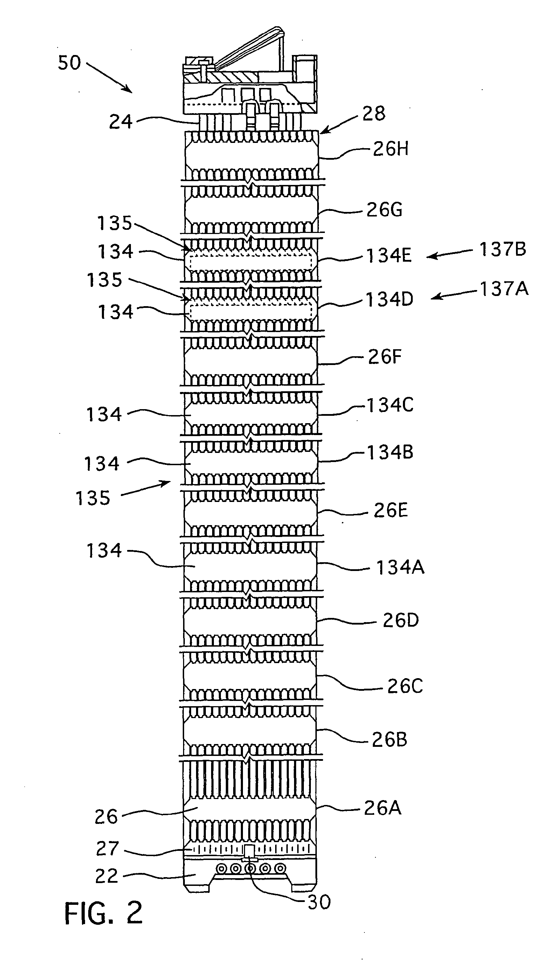

As shown in Figure 2, a fuel assembly 50 includes multiple and variably-spaced Intermediate Flow Mixing grids 134. That is, the fuel assembly 50 includes the same components as identified above except there are multiple and variably-spaced Intermediate Flow Mixing grids 134. Accordingly, the fuel assembly 50 of the present invention includes a lower end structure or bottom nozzle 22 for supporting the fuel assembly 50 on the lower core plate (not shown) in the core region of a reactor (not shown); a number of longitudinally extending control rod guide tubes, or thimbles 24, projecting upwardly from the bottom nozzle 22; a plurality of transverse support grids 26 axially spaced along the guide thimbles 24; an organized array of elongated fuel rods 28 transversely spaced and supported by the grids 26; an instrumentation tube 30 located in the center of the assembly; and an upper end structure or top nozzle 32 attached to the upper ends of the guide thimbles 24, in a conventional manner, to form an integral assembly capable of being conventionally handled without damaging the assembly components. The bottom nozzle 22 and the top nozzle 32 have end plates (not shown) with flow openings (not shown) for the upward longitudinal flow of a fluid coolant, such as water, to pass up and along the various fuel rods 28 to receive the thermal energy therefrom. Again, there are eight support grids identified as support grids 26A-26H, with support grid 26A being nearest to the bottom nozzle 22 and the support grids being lettered sequentially upwards so that support grid 26H is nearest the top nozzle 32. The spacing of the support grids 26A-26H may be substantially similar to the spacing of the prior art fuel assembly 20.

Unlike the prior art, however, there are at least two multiple and variably-spaced Intermediate Flow Mixing grids 134 disposed between two adjacent support grids 26. In the embodiment shown, between the adjacent upper support grids 26E and 26F or 26F and 26G there are at least two Intermediate Flow Mixing grids 134. That is, as shown, the lowest Intermediate Flow Mixing grid 134A is still between the fourth and fifth support grids, 26D, 26E but, between upper support grids 26E and 26F, there are two Intermediate Flow Mixing grids 134B, 134C. Additionally, between upper support grids 26F and 26G there are two Intermediate Flow Mixing grids 134D, 134E. Thus, the at least two Intermediate Flow Mixing grids 134 disposed between a pair of adjacent support grids 26 may be said to include two Intermediate Flow Mixing grids 134 disposed between a pair of adjacent support grids 26 and a single Intermediate Flow Mixing 134 grid disposed between another pair of adjacent support grids 26. The different pairs of adjacent support grids 26 may share a common support grid 26. Similarly, the at least two Intermediate Flow Mixing grids 134 disposed between a pair of adjacent support grids 26 may be said to include two Intermediate Flow Mixing grids 134 disposed between a pair of adjacent support grids 26 and two other Intermediate Flow Mixing grids 134 disposed between another pair of adjacent support grids 26.

The at least two multiple and variably-spaced Intermediate Flow Mixing grids 134 may be spaced unevenly between the adjacent support grids 26. That is, unlike the prior art Intermediate Flow Mixing grids 34 which was spaced generally evenly between adjacent support grids 26, the at least two multiple and variably-spaced Intermediate Flow Mixing grids 134 may be disposed, individually or together, closer to one or the other of the adjacent support grids 26.

In addition to having multiple and variably-spaced Intermediate Flow Mixing grids 134, the present invention further provides for having different multiple and variably-spaced Intermediate Flow Mixing grids 134, having mixing devices 135 with different sizes, shapes and patterns than the other multiple and variably-spaced Intermediate Flow Mixing grids 134. That is, as before, the multiple and variably-spaced Intermediate Flow Mixing grids 134 have mixing devices 135, such as vanes. However, each of the multiple and variably-spaced Intermediate Flow Mixing grids 134 may have different mixing devices 135 with different sizes, shapes and patterns than the other multiple and variably-spaced Intermediate Flow Mixing grids 134. Similarly, the support grids 26 may also include mixing devices 135. The mixing devices 135 on the support grids 26 may also have a different shape, size, or pattern than the mixing devices on either the other support grids 26 or the multiple and variably-spaced intermediate Flow Mixing grids 134. Hereinafter, the shape, size, or pattern of mixing devices 135 shall be referred to as a mixing device formation 137 (shown schematically). Additionally, different mixing device formations shall be identified with a different letter, e.g. 137A or 137B. Thus, as an example, the fourth Intermediate Flow Mixing grid 134D includes a first formation 137A of vanes and the fifth Intermediate Flow Mixing grid 134E includes a second, different formation 137B of vanes. In this manner the multiple and variably-spaced Intermediate Flow Mixing grids 134 may be structured to optimize the mixing at particular elevation in the fuel assembly 50.

While specific embodiments of the invention have been described in detail, it will be appreciated by those skilled in the art that various modifications and alternatives to those details could be developed in light of the overall teachings of the disclosure. For example, the fuel rod assembly 20 may have a greater or lesser length than the fuel rod assembly 20 shown in the figures. Thus, an alternate fuel rod assembly 50 may accommodate more, or fewer, support grids 26 and Intermediate Flow Mixing grids 134 than the fuel rod assembly 20 shown in the figures. Accordingly, the particular arrangements disclosed are meant to be illustrative only and not limiting as to the scope of invention which is to be given the full breadth of the claims appended and any and all equivalents thereof.

## Claims

1. A fuel assembly for a pressurized water reactor comprising:
a bottom nozzle;
a plurality of elongated guide thimbles projecting upwardly from said the bottom nozzle;
a plurality of support grids axially spaced along the guide thimbles; and
at least two Intermediate Flow Mixing grids disposed between two adjacent support grids.

2. The fuel assembly of claim 1 wherein said at least two Intermediate Flow Mixing grids disposed between a pair of adjacent support grids includes two Intermediate Flow Mixing grids disposed between a pair of adjacent support grids and a single Intermediate Flow Mixing grid disposed between another pair of adjacent support grids.

3. The fuel assembly of claim 1 wherein said at least two Intermediate Flow Mixing grids disposed between a pair of adjacent support grids includes two Intermediate Flow Mixing grids disposed between a pair of adjacent support grids and two other Intermediate Flow Mixing grids disposed between another pair of adjacent support grids.

4. The fuel assembly of claim 1 wherein said at least two Intermediate Flow Mixing grids disposed between two adjacent support grids includes two Intermediate Flow Mixing grids disposed between two adjacent support grids, two other Intermediate Flow Mixing grids disposed between two other adjacent support grids, and a single Intermediate Flow Mixing grid disposed between yet two other adjacent support grids.

5. The fuel assembly of claim 1 wherein:
said plurality of support grids include a fifth support grid, a sixth support grid and a seventh support grid, said fifth, sixth and seventh supports grids being spaced from each other; and
said at least two Intermediate Flow Mixing grids include at least two Intermediate Flow Mixing grids disposed between said fifth and sixth support grids.

6. The fuel assembly of claim 5 wherein said at least two Intermediate Flow Mixing grids include at least two Intermediate Flow Mixing grids disposed between said sixth and seventh support grids.

7. The fuel assembly of claim 1 wherein:
said plurality of support grids include a fourth support grid, a fifth support grid, a sixth support grid and a seventh support grid, said fourth, fifth, sixth and seventh supports grids being spaced from each other;
said at least two Intermediate Flow Mixing grids includes two Intermediate Flow Mixing grids disposed between said fifth and sixth support grids and two Intermediate Flow Mixing grids disposed between said sixth and seventh support grids; and
said at least two Intermediate Flow Mixing grids further includes a single Intermediate Flow Mixing grid disposed between said fourth and fifth support grids.

8. The fuel assembly of claim 1 wherein:
said plurality of support grids include a fifth support grid, a sixth support grid and a seventh support grid, said fifth, sixth and seventh supports grids being spaced from each other; and
said at least two Intermediate Flow Mixing grids include at least two Intermediate Flow Mixing grids disposed between said sixth and seventh support grids.

9. The fuel assembly of claim 1 wherein
each Intermediate Flow Mixing grid includes mixing devices disposed in a formation; and
at least two said Intermediate Flow Mixing grids having a different mixing device formations.

10. The fuel assembly of claim 1 wherein:
at least one said support grid includes mixing device disposed in a formation;
at least one Intermediate Flow Mixing grid includes mixing device disposed in a formation; and
said mixing device formation on said Intermediate Flow Mixing grid having a different formation than said mixing device formation on said support grid.

11. The fuel assembly of claim 1 wherein said Intermediate Flow Mixing grids are spaced unevenly between a pair of adjacent upper support grids.

12. The fuel assembly of claim 11 wherein said at least two Intermediate Flow Mixing grids disposed between a pair of adjacent support grids includes two Intermediate Flow Mixing grids disposed between a pair of adjacent support grids and a single Intermediate Flow Mixing grid disposed between another pair of adjacent support grids.

13. The fuel assembly of claim 11 wherein said at least two Intermediate Flow Mixing grids disposed between a pair of adjacent support grids includes two Intermediate Flow Mixing grids disposed between a pair of adjacent support grids and two other Intermediate Flow Mixing grids disposed between another pair of adjacent support grids.

14. The fuel assembly of claim 11 wherein said at least two Intermediate Flow Mixing grids disposed between two adjacent support grids includes two Intermediate Flow Mixing grids disposed between two adjacent support grids, two other Intermediate Flow Mixing grids disposed between two other adjacent support grids, and a single Intermediate Flow Mixing grid disposed between yet two other adjacent support grids.

15. The fuel assembly of claim 11 wherein:
said plurality of support grids include a fifth support grid, a sixth support grid and a seventh support grid, said fifth, sixth and seventh supports grids being spaced from each other; and
said at least two Intermediate Flow Mixing grids include at least two Intermediate Flow Mixing grids disposed between said fifth and sixth support grids.

16. The fuel assembly of claim 15 wherein said at least two Intermediate Flow Mixing grids include at least two Intermediate Flow Mixing grids disposed between said sixth and seventh support grids.

17. The fuel assembly of claim 11 wherein:
said plurality of support grids include a fourth support grid, a fifth support grid, a sixth support grid and a seventh support grid, said fourth, fifth, sixth and seventh supports grids being spaced from each other;
said at least two Intermediate Flow Mixing grids includes two Intermediate Flow Mixing grids disposed between said fifth and sixth support grids and two Intermediate Flow Mixing grids disposed between said sixth and seventh support grids; and
said at least two Intermediate Flow Mixing grids further includes a single Intermediate Flow Mixing grid disposed between said fourth and fifth support grids.

18. The fuel assembly of claim 11 wherein:
said plurality of support grids include a fifth support grid, a sixth support grid and a seventh support grid, said fifth, sixth and seventh supports grids being spaced from each other; and
said at least two Intermediate Flow Mixing grids include at least two Intermediate Flow Mixing grids disposed between said sixth and seventh support grids.

19. The fuel assembly of claim 11 wherein
each Intermediate Flow Mixing grid includes mixing devices disposed in a formation; and
at least two said Intermediate Flow Mixing grids having a different mixing device formations.

20. The fuel assembly of claim 11 wherein:
at least one said support grid includes mixing device disposed in a formation;
at least one Intermediate Flow Mixing grid includes mixing device disposed in a formation; and
said mixing device formation on said Intermediate Flow Mixing grid having a different formation than said mixing device formation on said support grid.
